# EUROPEAN PATENT SPECIFICATION

(11) **EP 1 693 239 B1**
(45) Date of publication and mention of the grant of the patent: **01.08.2012**
(21) Application number: 06003020.2
(22) Date of filing: 15.02.2006
(51) Int. Cl.: B60K 13/02

(54) **Air intake duct for vehicle**
Lufteinlasskanal für ein Fahrzeug
Conduit de prise d'air pour véhicule

(30) Priority: 17.02.2005 JP 2005041379
(43) Date of publication of application: 23.08.2006
(73) Proprietor: Toyota Jidosha Kabushiki Kaisha, Aichi-ken, 471-8571 (JP)
(72) Inventor: Yoshimura, Hitoshi, Toyota-shi Aichi-ken, 471-8571 (JP); Goto, Isao, Toyota-shi Aichi-ken, 471-8571 (JP)
(74) Representative: Kuhnen & Wacker

(56) References cited:
- EP-A- 1 396 371
- EP-A1- 0 065 183
- JP-A- 9 189 273
- JP-A- 11 303 620
- US-A- 4 984 350
- US-A- 5 251 712

## Description

This nonprovisional application is based on Japanese Patent Application No. 2005-041379 filed with the Japan Patent Office on February 17, 2005..

### BACKGROUND OF THE INVENTION

### Field of the Invention

The present invention relates arrangements for vehicular intake ducts for example introducing external air into engines, and intake ducts.

### Description of the Background Art

An engine room provided for example in an automobile or similar vehicle for example at a front location accommodates an engine, a radiator and accessories (e.g., an alternator, a cooler compressor, a power steering, and the like) associated with the engine.

The engine has an intake system and an exhaust system attached thereto to supply air or the like to a combustion chamber and exhaust gas from the combustion chamber, respectively. The intake system at least has an intake duct taking in external air, an air cleaner removing foreign matters contained in the air, and the like.

Generally, to allow an engine to provide combustion more efficiently, fresh and cold air present in front of the engine must be introduced into the engine, and accordingly an intake duct is arranged in the engine room closer to a front side. (See Japanese Patent Laying-open No. 2004-124757.)

Intake duct is formed of polyethylene (PE) or polypropylene (PP) or a similar, relatively hard synthetic resin for example by injection-molding or blow-molding or similar molding.

In the above conventional example if the vehicle has a front side slightly bumping into some object the intake duct, which is prone to fracture, fractures and may thus damage equipment (such as a radiator, an intercooler and the like) accommodated in the engine room or cause a similar additional damage which may necessitate an additional cost to repair the damage.

To avoid this, the engine's compartment may be increased in size or the equipment may be modified in layout. It is difficult, however, to adopt such approaches, since some designs prevent an engine from having a compartment increased in size and there are also constraints on modifying the equipment in arrangement.

Document EP 0 065 183 A1 discloses an air duct structure of an engine for a motor vehicle, in which the air duct includes an extensible, contractible and bendable portion, which may be formed either separate there from or integral therewith, whereby the air duct can easily be moved out of position to provide a sufficient space behind a lamp unit of the motor vehicle to facilitate replacement of a bulb in the head lamp unit.

### SUMMARY OF THE INVENTION

The present invention contemplates an arrangement for a vehicular intake duct that can prevent equipment in an engine room from significant damage or protect it against damage if the vehicle has a front portion slightly bumping into an object.

To solve this object, the present invention provides an engine room for a vehicle according to claim 1, comprising an engine, a radiator, an air cleaner and an intake duct. Said intake duct is arranged in a vehicle's body internal to said engine room between a radiator's upper support the air cleaner at a location inner than said upper support and is situated separate from and opposite to the upper support in a fore-aft direction of the body, to introduce external air into the air cleaner. The intake duct has a linear portion extending in a longitudinal direction of the upper support, and overlapping the upper support, as seen from a front side of the body in projective view; and the intake duct at least has the linear portion formed of an elastic material.

Said intake duct further comprises a connection connected to said air cleaner and an inlet for introducing external air, wherein said connection is disposed at the outer side of the vehicle body as seen in vehicle width direction and said inlet is disposed at the inner side of the vehicle body as seen in vehicle width direction. One end of the linear portion serves as an inlet introducing external air. The intake duct also has an intermediate portion closer to the other end of the liner portion and extending downward, and said connection extending from the intermediate portion rearward and connected to the air cleaner

If the upper support slightly bumps into an external object and is deformed toward the engine room by an amount, and together the air cleaner compresses the intake duct at the linear portion in the body's fore-aft direction the linear portion can be prevent from fracture and instead only, elastically be compressed and deformed. In contrast to a conventional example having a linear portion fractured, the present arrangement can reduce the possibility that an intake duct will fracture into pieces which in turn thrust into and thus damage the radiator and the like, i.e., cause additional damage. The present arrangement can thus contribute to reduced damageability.

Furthermore, the intake duct having the linear portion extending along the upper support or in the direction of the width of the body allows designing a structure ensuring that air is taken in efficiently and vibration and noise characteristics are ensured, i.e., the intake duct can be increased in length and diameter as soon as possible. Furthermore, the intake duct that does not overlie the radiator's upper support allows the body to have a front portion designed to be reduced in height and hence designed with an increased degree of freedom.

Note that the intake duct is entirely formed of the elastic material. When the intake duct is attached to the air cleaner the intake duct can be elastically deformed and thus help an operation attaching the same.

This configuration illustrates a general geometry of the intake duct in an example and is advantageous when the engine room has a relatively small size in the fore-aft direction of the vehicle's body.

In the present arrangement the intake duct can at least have the linear portion formed of the elastic material formed of polypropylene (PP) and ethylene-propylene rubber (EPDM) mixed together.

Among flexible, typical elastic materials, a relatively inexpensively available, such material is selected and used to form the intake duct. This is advantageous in producing the intake duct inexpensively. Furthermore, the above synthetic resin is advantageously smaller in weight than rubber and recyclable while also being equivalent in flexibility, strength and moldablitiy to rubber.

The present intake duct can provide a function and effect similar to that of the arrangement for the intake duct as described above.

In accordance with the present invention if a vehicle has a front portion slightly bumping into an object, equipment in an engine room can be prevented from significant damage or protected against damage. , Furthermore, the intake duct can be increased in length as soon as possible, which can contribute to increased efficiency in taking in air, and reduced vibration and noise.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a plan view of one embodiment of an arrangement for an intake duct in accordance with the present invention.
Fig. 2 is a side view of the Fig. 1 arrangement.
Fig. 3 is a perspective view of the intake duct of Fig. 1 shown discretely.
Fig. 4 shows a vehicle having a body slightly bumping into an object in Fig. 1
Fig. 5 is a side view of another embodiment of the intake duct shown in Fig. 2.

### DESCRIPTION OF THE PREFERRED EMBODIMENTS

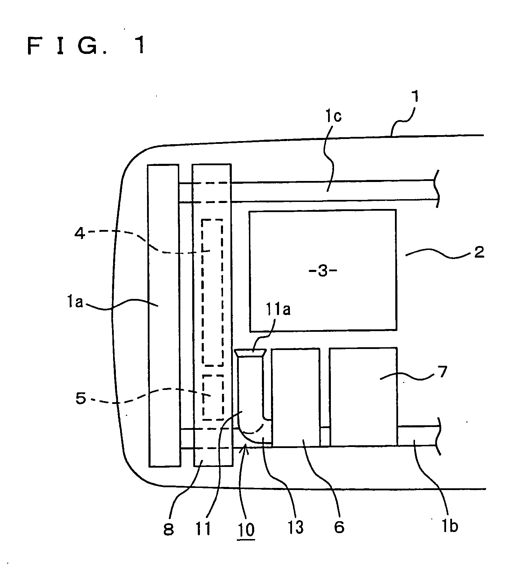

Hereinafter the present invention in an embodiment will be described with reference to Figs. 1-4. This embodiment exemplifies a type of automobile or similar vehicle having a body 1 having a front portion provided with an engine room 2.

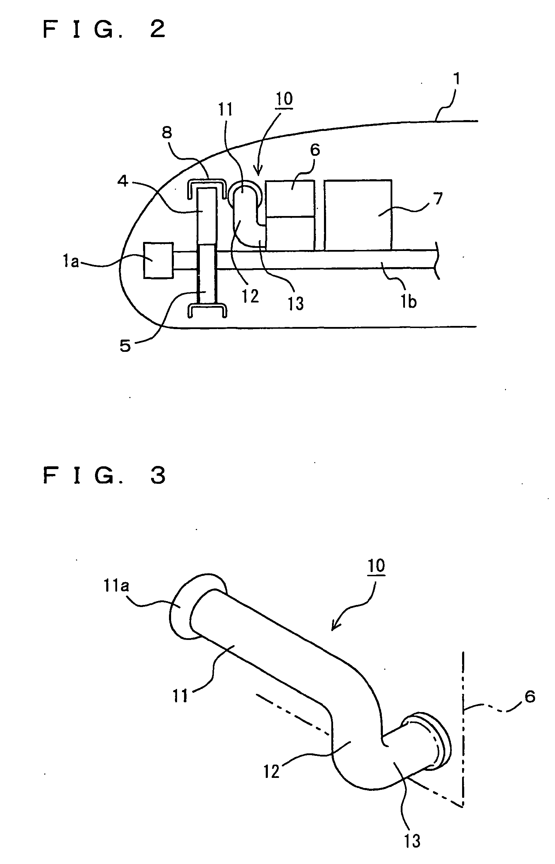

As shown in Figs. 1 and 2, engine room 2 accommodates an engine 3 as a matter of course, and a radiator 4, an intercooler 5, an air cleaner 6, a battery 7 and other similar equipment associated with engine 3. Note that the figures do not show accessories such as an alternator, a cooler compressor, a power steering and the like associated with engine 3. Furthermore in the figures body 1 is assumed as including an engine hood and a bumper cover. Furthermore in the figures a reference character 1a denotes a front bumper and reference characters 1b and 1c denote front side members.

Radiator 4 is situated in engine room 2 under the radiator's upper support 8 arranged in body 1 at a front upper location. Intercooler 5 underlies the radiator's upper support 8 adjacent to radiator 4.

Air cleaner 6 and battery 7 are situated in engine room 2 adjacent to one side of engine 3. Air cleaner 6 is situated inner than the radiator's upper support 8, separate therefrom and opposite thereto as seen in the fore-aft direction of body 1, and battery 7 is arranged behind air cleaner 6.

Air cleaner 6 has an air inlet with an intake duct 10 attached thereto.

Intake duct 10 introduces external air into air cleaner 6 and as shown in Fig. 2 it is located between the radiator's upper support 8 and air cleaner 6.

As shown in Figs. 1-3, intake duct 10 has a linear portion 11 extending along the radiator's upper support 8 or the body's width with one end serving as an inlet 11a introducing external air, an intermediate portion 12 located closer to the other end of linear portion 11 and extending downward, and a connection 13 extending from intermediate portion 12 rearward to connect to air cleaner 6.

Intake duct 10 has linear portion 11 situated to overlap the radiator's upper support 8, as seen from a front side of body 1 in projective view.

Intake duct 10 thus provided is entirely formed of an elastic material. More specifically, intake duct 10 is suitably formed of a material implemented by an elastic material including an elastomer formed of polypropylene (PP) and ethylene-propylene rubber (EPDM) mixed together.

The elastomer serving as a material for intake duct 10 is excellent in that it is not only equivalent to rubber and the like in flexibility, oil resistance, heat resistance, tensile strength and tear strength, but also smaller in weight than rubber and the like and recyclable.

Such intake duct 10 is formed of the above described elastomer by a generally well known blow molding technique. This technique is well known and will not be described herein.

Thus intake duct 10 is formed of elastomer and situated in engine room 2 at a front location between the radiator's upper support 8 and air cleaner 6 at a location intermediate as seen in the direction of the width of body 1 such that when intake duct 10 is seen from a front side of body 1 in projective view intake duct 10 overlaps the radiator's upper support 8.

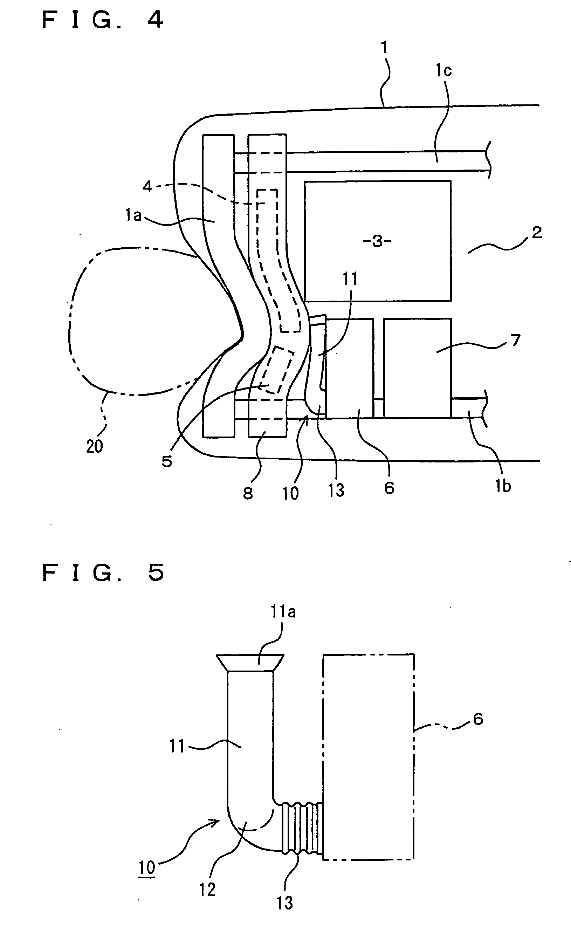

If for example as shown in Fig. 4 the radiator's upper support 8 slightly bumps into an external object 20 and thus deforms toward engine room 2 by an amount, and together air cleaner 6 compresses intake duct 10 at linear portion 11 in the fore-aft direction of body 1, linear portion 11 does not fracture and is instead only elastically compressed and deformed.

In contrast to a conventional intake duct formed for example of hard resin prone to fracture by impact load, the present intake duct can reduce the possibility that it will fracture into pieces which in turn thrust into and thus damage radiator 4, intercooler 5 and the like, i.e., cause additional damage. The present intake duct can thus contribute to reduced damageability.

Furthermore, intake duct 10 having linear portion 11 extending in the direction of the width of body 1 allows designing a structure ensuring that air is taken in efficiently and vibration and noise characteristics are ensured, i.e., it can be increased in length and diameter as soon as possible. Furthermore, intake duct 10 that does not overlie the radiator's upper support 8 allows body 1 to have a front portion designed to be reduced in height and hence designed with an increased degree of freedom.

Note that in the above described embodiment intake duct 10 is entirely formed of an elastic material. When intake duct 10 is attached to air cleaner 6 intake duct 10 can be elastically deformed and thus help an operation attaching the same.

Hereinafter the present invention will be described in another embodiment.
(1) Intake duct 10 may have at least linear portion 11 alone formed of elastic material.
(2) Intake duct 10 may have connection 13 in the form of an accordion as shown in Fig. 5. If body 1 has a front portion bumping into an object intake duct 10 will have linear portion 11 elastically deformed and in addition connection 13 also elastically compressed and deformed in it axial direction. Connection 13 that can be elastically compressed and thus deformed can also be less prone to fracture. If the vehicle collides, connection 13 can be prevented from fracturing into pieces damaging radiator 4 and other similar equipment and also better absorb shock.
(3) Intake duct 10 may have linear portion 11 arranged obliquely rather than parallel to the longitudinal direction of the radiator's upper support 8. If body 1 has a front portion bumping into an object intake duct 10 only has linear portion 11 partially, elastically deformed and can thus be prevented from fracture.

Although the present invention has been described and illustrated in detail, it is clearly understood that the same is by way of illustration and example only and is not to be taken by way of limitation, the scope of the present invention being limited only by the terms of the appended claims.

## Claims

1. An engine room (2) for a vehicle accommodating:
an engine (3), a radiator (4), an air cleaner (6) and an intake duct (10), wherein
said intake duct (10) is arranged between a radiator's upper support (8) of a vehicle body (1) and the air cleaner (6) located in said engine room (2) of said vehicle body (1) at a position inner than said upper support (8), separate there from and opposite thereto as seen in a fore-aft direction of said body (1), to introduce external air into said air cleaner (6),
the intake duct (10) has a linear portion (11) extending in a longitudinal direction of said upper support (8), and overlapping said upper support (8), as seen from a front side of said vehicle body (1) in projective view, and has at least said linear portion (11) formed of an elastic material,
said intake duct (10) further comprises a connection (13) connected to said air cleaner (6) and an inlet (11a) for introducing external air, **characterized in that**
said connection (13) is disposed at the outer side of the vehicle body as seen in vehicle width direction and said inlet (11a) is disposed at the inner side of the vehicle body (1) as seen in vehicle width direction,
one end of the linear portion (11) of the intake duct (10) is serving as the inlet (11a) for introducing external air, wherein the intake duct (10) further has an intermediate portion (12) closer to the other end of said linear portion (11) and extending downward, and
said connection (13) is connected to said air cleaner (6) extending from said intermediate portion (12) rearward.

2. The engine room (2) according to claim 1, **characterized in that** said intake duct (10) at least has said linear portion (11) formed of said elastic material formed of polypropylene (PP) and ethylene-propylene rubber (EPDM) mixed together.

3. The engine room (2) according to any of claims 1 or 2, **characterized in that** said vehicle body (1) has a side member (1b) and said connection (13) is disposed adjacent to said side member (1b).

## Patentansprüche

1. Motorraum (2) für ein Fahrzeug, in dem aufgenommen sind:
ein Motor (3), ein Kühler (4), eine Luftreinigungseinrichtung (6) und ein Einlasskanal (10), wobei der Einlasskanal (10) zwischen einem oberen Träger (8) des Kühlers eines Fahrzeugkörpers (1) und der Luftreinigungseinrichtung (6) angeordnet ist, die in dem Motorraum (2) des Fahrzeugkörpers (1) an einer weiter innen liegenden Position als der obere Träger (8), getrennt von demselben und in der von vorne nach hinten verlaufenden Richtung des Körpers (1) betrachtet gegenüberliegend angeordnet ist, um in die Luftreinigungseinrichtung (6) Luft von außen einzuführen,
wobei der Einlasskanal (10) einen linearen Bereich (11) aufweist, der sich in einer Längsrichtung des oberen Trägers (8) erstreckt und den oberen Träger (8) überlappt, wie von einer vorderen Seite des Fahrzeugkörpers (1) in einer perspektivischen Ansicht zu sehen ist, und bei dem zumindest der lineare Bereich (11) aus einem elastischen Material gebildet ist,
wobei der Einlasskanal (10) ferner eine Verbindung (13) aufweist, die mit der Luftreinigungseinrichtung (6) und einem Einlass (11a) zum Einführen von Luft von außen verbunden ist, **dadurch gekennzeichnet, dass**
die Verbindung (13) an der Außenseite des Fahrzeugkörpers angeordnet ist, wie in der Breitenrichtung des Fahrzeugs zu sehen ist, und der Einlass (11a) an der inneren Seite des Fahrzeugkörpers (1) angeordnet ist, wie in der Fahrzeugbreitenrichtung zu sehen ist,
ein Ende des linearen Bereichs (11) des Einlasskanals (10) als der Einlass (11a) zum Einführen von Luft von außen dient, wobei der Einlasskanal (10) ferner einen Zwischenbereich (12) aufweist, der näher an dem anderen Ende des linearen Bereichs (11) ist und sich nach unten erstreckt, und
die Verbindung (13) mit der Luftreinigungseinrichtung (6) verbunden ist, die sich von dem Zwischenbereich (12) nach hinten erstreckt.

2. Motorraum (2) nach Anspruch 1, **dadurch gekennzeichnet, dass** bei dem Einlasskanal (10) zumindest der lineare Bereich (11) aus dem elastischen Material gebildet ist, das aus mit einander vermischtem Polypropylen (PP) und Ethylen-Propylen-Kautschuk (EPDM) besteht.

3. Motorraum (2) nach einem der Ansprüche 1 oder 2, **dadurch gekennzeichnet, dass** der Fahrzeugkörper (1) ein Seitenelement (1b) aufweist und die Verbindung (13) neben dem Seitenelement (1b) angeordnet ist.

## Revendications

1. Compartiment (2) pour un véhicule longeant :
un moteur (3), un radiateur (4), un filtre à air (6) et un conduit d'admission (10), où
ledit conduit d'admission (10) est agencé entre un support supérieur (8) du radiateur d'une carrosserie (1) et le filtre à air (6) situé dans ledit compartiment (2) de ladite carrosserie (1) à une position plus interne que ledit support supérieur (8), et est situé en étant séparé du support supérieur (8) et opposé à celui-ci en regardant dans un sens longitudinal dudit corps (1), de sorte à introduire de l'air externe dans ledit filtre à air (6),
le conduit d'admission (10) possède une partie linéaire (11) s'étendant dans une direction longitudinale dudit support supérieur (8), et chevauchant ledit support supérieur (8), en regardant d'un côté avant de ladite carrosserie (1) dans le sens de la projection, et a au moins ladite partie linéaire (11) réalisée avec un matériau élastique,
ledit conduit d'admission (10) comprend en outre une connexion (13) reliée audit filtre à air (6) et à une entrée (11a) pour introduire l'air externe,
**caractérisé en ce que**
ladite connexion (13) est disposée au côté externe de la carrosserie en regardant dans la direction de la largeur du véhicule et ladite entrée (11a) est disposée au côté interne de la carrosserie (1) en regardant dans la direction de la largeur du véhicule,
une extrémité de la partie linéaire (11) du conduit d'admission (10) sert d'entrée (11a) pour introduire l'air externe, où le conduit d'admission (10) possède en outre une partie intermédiaire (12) plus proche de l'autre extrémité de ladite partie linéaire (11) et s'étendant vers le bas, et
ladite connexion (13) est reliée audit filtre à air (6) s'étendant de ladite partie intermédiaire (12) vers l'arrière.

2. Compartiment (2) selon la revendication 1, **caractérisé en ce que** ledit conduit d'admission (10) a au moins ladite partie linéaire (11) réalisée avec ledit matériau élastique réalisé en polypropylène (PP) et en caoutchouc éthylène-propylène (EPDM) mélangés ensemble.

3. Compartiment (2) selon l'une des revendications 1 ou 2, **caractérisé en ce que** ladite carrosserie (1) possède un élément latéral (1b) et **en ce que** ladite connexion (13) est disposée de manière adjacente audit élément latéral (1b).
